# EUROPEAN PATENT SPECIFICATION

(11) **EP 4 003 018 B1**
(45) Date of publication and mention of the grant of the patent: **26.11.2025**
(21) Application number: 19748965.1
(22) Date of filing: 22.07.2019
(51) Int. Cl.: A01N 47/44, A01N 31/02, A01N 25/30, A01N 43/16, A01N 25/16, A01P 1/00

(54) **ANTIMICROBIAL COMPOSITIONS**
ANTIMIKROBIELLE ZUSAMMENSETZUNGEN
COMPOSITIONS ANTIMICROBIENNES

(43) Date of publication of application: 01.06.2022
(73) Proprietor: Gojo Industries Inc, Akron, Ohio 44309 (US)
(72) Inventor: EL YACOUBI, Kamel, 77100 Meaux (FR); GREBOVAL, Elodie, 77260 La Ferte sous Jouarre (FR); TOREST, Johanna, 94550 Chevilly-Larue (FR); STROHL, Philippe, 94410 Saint-Maurice (FR)
(74) Representative: Cabinet Beau de Loménie
(86) International application number: PCT/IB2019/056255
(87) International publication number: WO 2021/014193

(56) References cited:
- WO-A1-95/31962
- WO-A2-2007/027871
- US-A- 3 960 745

## Description

### FIELD

The present disclosure relates to antimicrobial compositions. More particularly, the present disclosure relates to antimicrobial compositions containing a synergistic blend of an antimicrobial active and two or more non-ionic surfactants with improved efficacy, low toxicity, and reduced residue production.

### BACKGROUND

Antimicrobial compositions have become increasingly popular not only for cleaning hands and skin, but also for disinfecting surfaces. It is particularly desirable to disinfect surfaces in both healthcare and foodservice applications. Regardless of form, antimicrobial compositions are desirable for the rapid disinfection of surfaces. It is important that the compositions have a low toxicity rating while providing rapid efficacy against bacteria, viruses, and fungi.

Surface cleansing compositions having antimicrobial effectiveness are known in the art. Such compositions often include cationic biocides, such as quaternary ammonium compounds, or bisbiguanides. However, traditional compositions including such cationic biocides often leave a layer of film residue or streaking on a surface after cleaning. Attempts have been made to eliminate such streaking and remnants without negatively impacting the antimicrobial efficacy. For example, U.S. 7,414,017 provides a cleansing composition that includes quaternary ammonium biocide, a C8-C10 alkyl polyglucoside, and an alcohol. It is desirable, however, to minimize the use of quaternary compounds in a cleansing composition, since these compounds tend to be irritating to the skin, eyes etc. Additionally, even when quaternary compounds are used at low levels that do not leave a visible film residue, the compounds may remain remnant on surfaces, even after rinsing. This is particularly an issue in the food industry, where these remnants may be transferred to food in contact with treated surfaces.

U.S. 5,719,113 provides a cleansing composition that includes chlorhexidine, at least one non-ionic surfactant, and at least one amphoteric surfactant. This particular composition specifically excludes the use of polyoxypropylene/polyoxyethylene block copolymers, stating that to be effective, such block copolymers had to be used at very high concentrations (20-25%) and at such high levels, the block copolymers can be defatting to the skin.

WO 2007/027871 describes an antimicrobial composition containing at least two kinds of antimicrobial agents, including polyhexamethylene biguanide, associated to a material substrate.

There remains a need for a stable and efficacious antimicrobial composition that eliminates streaking or film residue, while also having a low toxicity rating.

### SUMMARY

The present disclosure is directed to an antimicrobial cleansing composition that comprises from 0.25 wt.% to 5.0 wt.% of at least one bisbiguanide antimicrobial active; up to 15 wt.% of at least one C2 - C8 glycol; from 0.1 wt.% to 2.0 wt.% of a first surfactant comprising an ethylene oxide-propylene oxide block copolymer; at least one additional surfactant selected from the group consisting of a C8-C16 alkyl polyglucoside and an amine oxide; and water, the composition having a pH between 5 and 7. The antimicrobial cleansing composition passes European Standard EN-1499. The bisbiguanide antimicrobial active may comprise chlorhexidine or salts thereof, such as, for example, chlorhexidine digluconate.

In some exemplary embodiments, the bisbiguanide antimicrobial active is present in an amount from 1.0 wt.% to 2.5 wt.%, based on the total weight of the composition.

The antimicrobial cleansing composition may include less than 1.0 wt.% of quaternary ammonium compounds, based on the total weight of the composition, or the composition may be free or essentially free of quaternary ammonium compounds.

In some exemplary embodiments, the at least one C2-C8 glycol comprises a C2-C4 glycol, such as, for example, butylene glycol, propylene glycol, or ethylene glycol. In some embodiments the C2-C4 glycol is propylene glycol. In some embodiments, the C2-C8 glycol may be present in an amount from 1.0 wt.% to 13.0 wt.%, based on the total weight of the composition.

In some exemplary embodiments, the composition has a pH between 5.2 and 6.5.

The additional surfactants in the composition may comprise coco-glucoside and an amine oxide selected from the group consisting of lauramine oxide, myristyl dimethylamine oxide, lauryl/myristyl amidopropyl amine oxide, decylamine oxide, myristamine oxide, and cocamidopropylamine oxide.

In some exemplary embodiments, the ethylene oxide-propylene oxide block copolymer is present in the composition in an amount from 0.05 to 1.2 wt.%, based on the total weight of the composition. The ethylene oxide-propylene oxide block copolymer may be a polyoxypropylene/polyoxyethylene block copolymer, such as one or more of PEG-7/PPG-2 propylheptyl ether, PEG-10/PPG-2 propylheptyl ether, and PEG-8/PPG-2 propylheptyl ether.

In some exemplary embodiments, the composition is a foamable composition.

In some exemplary embodiments, the C8-C16 alkyl polyglucoside comprises coco-glucoside and the amine oxide is selected from the group consisting of lauramine oxide, myristyl dimethylamine oxide, lauryl/myristyl amidopropyl amine oxide, decylamine oxide, myristamine oxide, and cocamidopropylamine oxide.

Yet further exemplary aspects of the present disclosure (outside the scope of the claims) are directed to a method of cleansing a surface. The method includes applying an antimicrobial cleansing composition to a surface, wherein the cleansing composition comprises from 0.25 wt.% to 5.0 wt.% of at least one bisbiguanide antimicrobial active; up to 15 wt.% of at least one C2 - C8 glycol; from 0.1 wt.% to about 2.0 wt.% of a first surfactant comprising an ethylene oxide-propylene oxide block copolymer; at least one additional surfactant selected from the group consisting of a C8-C16 alkyl polyglucoside and an amine oxide; and water, wherein the composition has a pH between 5 and 7. The antimicrobial cleansing composition passes European Standard EN-1499. The method may further include rinsing the surface with water.

In some exemplary embodiments (outside the scope of the claims), the surface comprises one or more of skin, hard surfaces, and soft surfaces.

### DETAILED DESCRIPTION

Disclosed herein are antimicrobial cleansing compositions. While the present disclosure describes certain embodiments of the antimicrobial cleansing compositions in detail, the present disclosure is to be considered exemplary and is not intended to be limited to the disclosed embodiments.

All references to singular characteristics or limitations of the present disclosure shall include the corresponding plural characteristic or limitation, and vice versa, unless otherwise specified or clearly implied to the contrary by the context in which the reference is made. Unless otherwise specified, "a," "an," "the," and "at least one" are used interchangeably. Furthermore, as used in the description and the appended claims, the singular forms "a," "an," and "the" are inclusive of their plural forms, unless the context clearly indicates otherwise.

To the extent that the term "includes" or "including" is used in the description or the claims, it is intended to be inclusive in a manner similar to the term "comprising" as that term is interpreted when employed as a transitional word in a claim. Furthermore, to the extent that the term "or" is employed (*e.g.,* A or B) it is intended to mean "A or B or both." When the applicants intend to indicate "only A or B but not both" then the term "only A or B but not both" will be employed. Thus, use of the term "or" herein is the inclusive, and not the exclusive use.

The antimicrobial cleansing compositions of the present disclosure can comprise, consist of, or consist essentially of the essential elements of the disclosure as described herein, as well as any additional or optional element described herein, or which is otherwise useful in antimicrobial cleansing applications.

All percentages, parts, and ratios as used herein are by weight of the total formulation, unless otherwise specified.

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all sub-ranges beginning with a minimum value of 1 or more and ending with a maximum value of 10 or less *(e.g.,* 1 to 6.1, or 2.3 to 9.4), and to each integer (1, 2, 3, 4, 5, 6, 7, 8, 9, and 10) contained within the range.

Any combination of method or process steps as used herein may be performed in any order, unless otherwise specified or clearly implied to the contrary by the context in which the referenced combination is made.

The present disclosure relates to antimicrobial compositions. More particularly, the present disclosure relates to antimicrobial compositions containing a synergistic blend of non-ionic surfactants and an antimicrobial active, to provide a non-toxic, antimicrobial surface cleansing composition that fulfills the requirements of the European standard EN1499. In some exemplary embodiments, the antimicrobial composition is free or substantially free of quaternary ammonium compounds.

In some exemplary embodiments, the antimicrobial composition is in the form of a cleanser, such as a liquid or foam soap-based cleanser and is used for application to a surface, including skin and inanimate surfaces. However, the antimicrobial composition may take on any form or delivery vehicle, such as a wipe, a lotion, a salve, foam, soap, gel, a cream, and the like. A wide variety of vehicles may be used to deliver the antimicrobial composition, such as, for example pads, bandages, patches, sticks, aerosol dispersers, pump sprays, trigger sprays, canisters, foam pumps, wipes, and the like.

In accordance with the present disclosure, the antimicrobial composition comprises (i) from 0.25 wt.% to 5.0 wt.% of at least one bisbiguanide antimicrobial active; (ii) up to 15 wt.% of at least one C2 - C8 glycol; (iii) from 0.1 wt.% to 2.0 wt.% of a first surfactant comprising an ethylene oxide-propylene oxide block copolymer; (iv) at least one additional surfactant selected from the group consisting of a C8-C16 alkyl polyglucoside and an amine oxide; and(v) water, wherein the composition has a pH between 5 and 7. The term "antimicrobial active," as used herein, constitutes a component capable of reducing or killing microorganisms on surfaces treated with a composition including the active component. Especially useful biguanide compounds include 1,1'-hexamethylene bis(5-(p-chlorophenyl)biguanide), commonly known as chlorhexidine, and its salts, e.g., with hydrochloric, acetic and gluconic acids. Any salt of chlorhexidine which is soluble in water or other non-alcohol solvent, e.g., gluconate, acetate, formate, lactate, isethionate, succinamate, glutamate, mono-diglycollate, dimethanesulfonate, di-isobutyrate, glucoheptonate, etc., may be used in the compositions of the present invention. In some exemplary embodiments, the chlorhexidine salts comprise one or more of gluconate and acetate.

In certain embodiments, the chlorhexidine salt comprises chlorhexidine digluconate (CHDG). CHDG is an effective disinfectant suitable for use as a cleansing composition due to its low toxicity and mildness on the skin. In the examples presented hereinbelow, CHDG is the only chlorhexidine salt presented therein. However, the present invention should not necessarily be limited to this particular chlorhexidine salt as other salts may also be suitable for the purposes of the present invention.

The antimicrobial composition may comprise up to 3 wt.%, and up to 2 wt.% of the at least one bisbiguanide antimicrobial active, based upon the total weight of the composition. In some embodiments, the antimicrobial compositions comprise at least 0.5 wt.%, at least 0.75 wt.%, at least 0.9 wt.%, at least 1.0 wt.%, and at least 1.5 wt.% of the at least one bisbiguanide antimicrobial active, based upon the total weight of the composition. In some exemplary embodiments, the antimicrobial composition comprises 0.5 to 3.5 wt.%, 1.0 to 2.5 wt.% and 1.3 to 2.3 wt.% of one or more antimicrobial active components.

The antimicrobial composition may be free or essentially free of quaternary ammonium compounds. The term "essentially free" means that the antimicrobial composition includes less than 0.05 wt.% quaternary ammonium compounds. Quaternary ammonium compounds, also known as "quats", typically comprise at least one quaternary ammonium cation with an appropriate anion. Exemplary quaternary compounds include: benzalkonium chlorides and/or substituted benzalkonium chlorides; methylbenzethonium chlorides, cetylpyridinium chlorides, and alkyl dimethyl benzyl ammonium chlorides (C12-18).

In some exemplary embodiments, the antimicrobial composition includes less than 1.5 wt.% of quaternary ammonium compounds, including less than 1.0 wt.%, less than 0.75 wt.%, less than 0.5 wt.%, less than 0.25 wt.%, less than 0.1 wt.%, and less than 0.05 wt.%. In some embodiments, the antimicrobial composition is free of quaternary ammonium compounds.

The antimicrobial composition up to 15 wt.% of at least one C2 - C8 glycol. In some exemplary embodiments, the at least one C2-C8 glycol comprises a C2-C4 glycol, such as butylene glycol, propylene glycol, ethylene glycol, preferably the C2-C4 glycol is propylene glycol.

In accordance with the present disclosure, the antimicrobial composition comprises up to 15 wt. % of one or more C2-C8 glycols, based upon the total weight of the composition, including up to 12 wt.%, up to 11 wt.%, and up to 10 wt.%. In some embodiments, the antimicrobial composition comprises at least 0.1 wt. % of one or more C2-C8 glycols, based upon the total weight of the composition, including at least 0.5 wt.%, at least 1.0 wt.%, at least 2.5 wt.%, at least 5.0 wt.%, and at least 7.5 wt. %.

In some embodiments, the antimicrobial composition comprises from 2.5 to 15 wt. % of one or more C2-C8 glycols, based upon the total weight of the composition. In some embodiments, the antimicrobial composition comprises from 1.0 to 13.0 wt. % of one or more C2-C8 glycols, based upon the total weight of the composition. In some embodiments, the antimicrobial composition comprises from 5.0 to 13.0 wt. % of one or more C2-C8 glycols, based upon the total weight of the composition. In some embodiments, the antimicrobial composition comprises from 8.0 to 12.0 wt. % of one or more C2-C8 glycols, based upon the total weight of the composition.

In accordance with the present disclosure, the antimicrobial composition has a pH of from 5.0 to 7.0. In some embodiments, the antimicrobial composition may have a pH of from 5.2 to 6.5. In some embodiments, the antimicrobial composition may have a pH of from 5.5 to 6.0.

When necessary, a pH adjusting agent or constituent may be used to provide and/or maintain the pH of a composition. Exemplary pH adjusting agents include, but are not limited to, primary amines, such as monoethanolamine; organic acids, such as citric acid, lactic acid, formic acid, acetic acid, proponic acid, butyric acid, caproic acid, oxalic acid, maleic acid, benzoic acid, carbonic acid, and the like; hydroxides such as sodium hydroxide, potassium hydroxide, calcium hydroxide, lithium hydroxide, magnesium hydroxide, ammonium hydroxide, tetraalkylammonium hydroxide, tetraarylammonium hydroxide, choline hydroxide, and combinations thereof; metal oxides such as calcium oxide and sodium oxide; conjugate bases of weak acids such as dipotassium phosphate, disodium phosphate, magnesium carbonate, pentapotassium triphosphate, pentasodium trisphosphate, potassium carbonate, sodium carbonate, tetrapotassium pyrophosphate, tetrasodium pyrophosphate, and trisodium phosphate; trialkyl/arylamine, monoethanolamine, diethanolamine, triethanolamine, sodium silicates, sodium tetraborates, sodium alkoxides, potassium alkoxides, sodium aryloxides, and like compounds having a sodium, potassium, lithium, calcium or magnesium cation.

In some embodiments, the one or more pH adjusting agent comprises, or consists of, citric acid.

In accordance with the present disclosure, the antimicrobial composition comprises up to 5.0 wt. % of one or more pH adjusting agents, based upon the total weight of the composition. In some embodiments, the antimicrobial composition comprises up to 2.5 wt. % of one or more pH adjusting agents, based upon the total weight of the composition, including up to 1.5 wt.%, up to 1.0 wt.%, up to 0.5 wt.%, up to 0.3 wt.%, and up to 0.1 wt.%. In some embodiments, the antimicrobial composition comprises from 0.01 to 3.0 wt. % of one or more pH adjusting agents, based upon the total weight of the composition. In some embodiments, the antimicrobial composition comprises from 0.05 to 2.0 wt. % of one or more pH adjusting agents, based upon the total weight of the composition. In some embodiments, the antimicrobial compositions comprise from 0.1 to 1.0 wt. % of one or more pH adjusting agents, based upon the total weight of the composition.

In accordance with the present disclosure, the antimicrobial compositions comprise a synergistic blend of at least two surfactants: a first surfactant comprising an ethylene oxide-propylene oxide block copolymer, and at least one additional surfactant selected from the group consisting of a C8-C16 alkyl polyglucoside and an amine oxide. In some exemplary embodiments, the antimicrobial composition is free or substantially free of at least one of anionic surfactants and amphoteric surfactants.

In some embodiments, the at least one additional surfactant comprises a C8-C16 alkyl polyglucoside. The class of alkyl polyglucosides ("APG") are derived from a glucose sugar and a fatty alcohol, including in which the alkyl group contains 8-16 carbon atoms. In some embodiments, the C8-16 alkyl polyglucoside surfactants include C8-14 alkyl polyglucoside surfactants and C8-12 alkyl polyglucoside surfactants. In some embodiments, at least one of the additional surfactant comprises, or consists of, a coco glucoside surfactant, which is a C8-16 alkyl polyglucoside surfactant.

In accordance with the present disclosure, the antimicrobial compositions comprise up to 5.0 wt. % of one or more alkyl polyglucosides, based upon the total weight of the composition. In some embodiments, the antimicrobial compositions comprise up to 2.5 wt. % of one or more one or more alkyl polyglucosides, based upon the total weight of the composition, including up to 2.0 wt.%, up to 1.8 wt.%, up to 1.5 wt.%, up to 1.2 wt.%, and up to 1.0 wt.%. In some embodiments, the antimicrobial compositions comprise from 0.01 to 3.0 wt. % of one or more one or more alkyl polyglucosides, based upon the total weight of the composition. In some embodiments, the antimicrobial compositions comprise from 0.05 to 2.0 wt. % of one or more one or more alkyl polyglucosides, based upon the total weight of the composition. In some embodiments, the antimicrobial compositions comprise from 0.1 to 1.5 wt. % of one or more one or more alkyl polyglucosides, based upon the total weight of the composition.

In accordance with the present disclosure, at least one of the additional surfactants comprises, or consists of, one or more of amine oxides, such as lauramine oxide, myristyl dimethylamine oxide, lauryl/myristyl amidopropyl amine oxide, decylamine oxide, myristamine oxide, and cocamidopropylamine oxide.

In accordance with the present disclosure, the antimicrobial compositions comprise up to 5.0 wt. % of one or more amine oxides, based upon the total weight of the composition. In some embodiments, the antimicrobial compositions comprise up to 2.5 wt. % of one or more amine oxides, based upon the total weight of the composition, including up to 2.0 wt.%, up to 1.8 wt.%, up to 1.5 wt.%, up to 1.2 wt.%, and up to 1.0 wt.%. In some embodiments, the antimicrobial compositions comprise from 0.01 to 2.0 wt. % of one or more amine oxides, based upon the total weight of the composition. In some embodiments, the antimicrobial compositions comprise from 0.05 to 1.5 wt. % of one or more amine oxides, based upon the total weight of the composition. In some embodiments, the antimicrobial compositions comprise from 0.1 to 1.0 wt. % of one or more amine oxides, based upon the total weight of the composition.

In some embodiments, the first surfactant comprises one or more of ethylene oxide-propylene oxide block copolymers. such as polyoxypropylene/polyoxyethylene block copolymers.

In some exemplary embodiments, the polyoxypropylene/polyoxyethylene block copolymer include polyethylene glycol (PEG)-polypropylene glycol (PPG) block copolymers, such as, for example, PEG-7/PPG-2 propylheptyl ether, PEG-10/PPG-2 propylheptyl ether, and PEG-8/PPG-2 propylheptyl ether.

Although it was previously believed that such block copolymers needed to be used at very high concentrations in order to provide adequate antimicrobial activity with chlorhexidine, it has been surprisingly discovered that the ethylene oxide-propylene oxide block copolymers may be used in substantially lower concentrations due to a synergistic relationship with the alkyl polyglucoside and amine oxide in the antimicrobial composition. This synergistic relationship provides a higher level of efficacy than conventional compositions, with less antimicrobial active in the composition. The level of efficacy achieved is comparable to compositions that include quaternary ammonium compounds in addition to the bisbiguanide. Thus, the present composition uses this synergistic approach to use these block copolymers as an antimicrobial booster for chlorhexidine at much lower levels than was previously believed possible. Using the block copolymers at such low levels eliminates the adverse skin effects, such as skin defatting, and also reduces film residue and the composition's toxicity rating.

In accordance with the present disclosure, the antimicrobial composition comprises up to 2.5 wt. % of one or more ethylene oxide-propylene oxide block copolymers, based upon the total weight of the composition. In some embodiments, the antimicrobial composition comprises up to 1.5 wt. % of one or more ethylene oxide-propylene oxide block copolymers, based upon the total weight of the composition, including up to 1.2 wt.%, up to 1.0 wt.%, up to 0.8 wt.%, up to 0.65 wt.%, and up to 0.5 wt.%. In some embodiments, the antimicrobial composition comprises from 0.01 to 2.0 wt. % of one or more ethylene oxide-propylene oxide block copolymers, based upon the total weight of the composition. In some embodiments, the antimicrobial composition comprises from 0.05 to 1.2 wt. % of one or more ethylene oxide-propylene oxide block copolymers, based upon the total weight of the composition. In some embodiments, the antimicrobial composition comprises from 0.1 to 0.8 wt. % of one or more ethylene oxide-propylene oxide block copolymers, based upon the total weight of the composition.

In accordance with the present disclosure, the antimicrobial composition comprises water as the carrier in an amount *quantum sufficit* (q.s.). In some embodiments, the antimicrobial composition comprises at least 40 wt. % water. In some embodiments, the antimicrobial composition comprises at least 50 wt. % water. In some embodiments, the antimicrobial composition comprises at least 60 wt. % water. In some embodiments, the antimicrobial composition comprises at least 70 wt. % water. In some embodiments, the antimicrobial composition comprises at least 75 wt. % water. In some embodiments, the antimicrobial composition comprises from 40 to 90 wt. % water. In some embodiments, the antimicrobial composition comprises from 50 to 85 wt. % water. In some embodiments, the antimicrobial composition comprises from 60 to 82 wt. % water. In some embodiments, the antimicrobial composition comprises from 65 to 80 wt. % water. More or less water may be required in certain instances, depending particularly on other ingredients and/or the amounts thereof employed.

In some exemplary embodiments, the antimicrobial composition includes one or more humectants or skin conditioners. Non-limiting examples of humectants include glycerin (glycerol), propylene glycol, hexylene glycol, 1,4-dihydroxyhexane, 1,2,6-hexanetriol, sorbitol, butylene glycol, caprylyl glycol, propanediols, such as methyl propane diol, dipropylene glycol, triethylene glycol, polyethylene glycols, ethoxydiglycol, polyethylene sorbitol, glycerol caprylate/caprate (GCC), and combinations thereof. Other humectants include glycolic acid, glycolate salts, lactate salts, urea, Jojoba wax PEG-120 esters (commercially available from FloraTech), hydroxyethyl urea, alpha-hydroxy acids, such as lactic acid, sodium pyrrolidone carboxylic acid, hyaluronic acid, chitin, and the like. In one exemplary embodiment, the humectant comprises glycerin.

The humectant may be included in the antimicrobial composition in an amount up to about 5.0 wt.%, or up to about 4.0 wt.%, or up to about 3.0 wt.%, or up to about 2.0 wt.%, or up to about 1.5 wt.%, or up to about 1.2 wt.%, based on the weight of the antimicrobial composition. In some exemplary embodiments, the humectant is included in an amount from about 0.001 wt.%, or from about 0.01 wt.%, or from about 0.05 wt.%, or from about 0.1 wt.%, or from about 0.5 wt.%, or from about 0.7 wt.%, or from about 0.8 wt.%, based on the weight of the antimicrobial composition. In one exemplary embodiment, the humectant is included in an amount from about 0.2 to about 3.0 wt.%, or from about 0.5 to about 2.0 wt.%, based on the weight of the antimicrobial composition.

In one or more embodiments, the antimicrobial cleansing composition includes one or more emollients (also known as a skin conditioner or moisturizer). Non-limiting examples of suitable emollients include aloe, aloe oil, jojoba oil, vitamin E, vitamin E acetate (tocopheryl acetate), Vitamin B₃ (niacinamide), C₈₋₁₀ alkane diols, sodium salt of pyroglutamic acid (sodium PCA), PEG-7 glyceryl cocoate, coco-glucoside and/or glyceryl oleate (Lamisoft^{®} PO), and polyquaternium, such as polyquaternium 10 and 39.

The emollient can be included in the antimicrobial cleansing composition in an amount from about 0.001 to about 5.0 wt. %, in other embodiments, from about 0.005 to about 3.5 wt. %, or from about 0.01 to about 3.0 wt. %, or from about 0.05 to about 2.5 wt. %, or from about 0.1 to about 2.0 wt. %, or from about 0.25 to about 1.5 wt. %, based upon the total weight of the composition.

Optionally, the antimicrobial cleansing composition may include one or more chelators. Examples of chelators include ethylenediaminetetraacetic acid (EDTA), and ethylenediamine N,N'-disuccinic acid (EDDS), such as trisodium ethylenediamine disuccinate. In one or more embodiments, the amount of chelating agent is from about 0.05 to about 5 wt. %, in other embodiments, from about 0.1 to about 1 wt. %, or from about 0.2 to about 0.5 wt.% based upon the total weight of the antimicrobial cleansing composition.

The antimicrobial cleansing composition may further comprise one or more preservatives. A preservative is a natural or synthetic ingredient that can be added to personal care products to prevent spoilage, such as from microbial growth or undesirable chemical changes. As opposed to antimicrobial functionality, which kills or inhibits microbe growth during use of a cleansing composition, a preservative inhibits microbe growth during storage of the composition. Typical cosmetic preservatives are classified as natural antimicrobials, broad-spectrum preservatives, or stabilizers.

The antimicrobial cleansing composition may further comprise one or more anti-irritants. Anti-irritants reduce signs of inflammation on the skin such as swelling, tenderness, pain, itching, or redness. Certain exemplary examples of suitable anti-irritants include Aloe Vera, allantoin, anion-cation complexes, aryloxypropionates, azulene, carboxymethyl cellulose, cetyl alcohol, diethyl phthalate, Emcol E607, monoethanolamine, glycogen, lanolin, N-(2-Hydroxylthyl) Palmitamide, N-Lauroyl Sarcosinates, Maypon 4C, mineral oils, miranols, Myristyl lactate, polypropylene glycol, polyvinyl pyrrolidone (PVP), tertiary amine oxides, thiodioglycolic acid, and zirconia. In one exemplary embodiment, the anti-irritant is avenanthrmides (avena sativa (oat), kernel oil, and glycerin) and niacinamide.

The antimicrobial cleansing composition may further comprise a fragrance. Any scent may be used in the composition including, but not limited to, any scent classification on a standard fragrance chart, such as floral, oriental, woody, and fresh. Exemplary scents include (white) flower, grapefruit, kiwifruit, pine, almond, and combinations thereof.

The fragrance may be included in the antimicrobial composition in an amount from 0 to about 5.0 wt. %, in other embodiments, from about 0.01 wt. % to about 3.0 wt. %, and in other embodiments, from about 0.05 wt. % to about 1.0 wt. %, based upon the total weight of the composition. The fragrance can be any made of any perfume, essential oil, aroma compounds, fixatives, terpenes, solvents, and the like.

Optionally, one or more foam stabilizers may be employed. Thus, in certain embodiments, the composition of the present invention further includes at least one foam stabilizer. The foam stabilizer may be polymeric or non-polymeric. In one embodiment, the foam stabilizer may be selected from polymeric or oligomeric foam stabilizers. In one embodiment, the foam stabilizer comprises a cationic oligomer or polymer.

Polymeric foam stabilizers include, for example, polyquatemium polymers. In general, a polyquaternium polymer is one that is designated as such by the CTFA. Polyquatemium polymers may be characterized by containing a quaternary ammonium group.

In one or more embodiments, the polyquatemium polymer includes a quatemized copolymer of vinylpyrrolidone and dimethylamino methacrylate, a hydrophobically modified quaternized copolymer of vinylpyrrolidone & dimethylaminopropyl methacrylamide, or a mixture thereof.

In some exemplary embodiments, the polyquatemium polymer has a molecular weight of from 1,000 to 5,000,000, in another embodiment, from about 1500 to about 2,500,000 and in yet another embodiment, from about 1,000,000 to about 2,000,000.

Other foam stabilizers that may operate to improve foam quality and/or stability include terpolymers of vinylcaprolactam (VCL), vinylpyrrolidone (VP) and dialkylaminoalkyl acrylate, including a VP/vinylcaprolactam/dimethylaminopropyl methacrylamide copolymer. Yet another foam stabilizer includes isobutylene/dimethylaminopropyl maleimide/ethoxylated maleimide/maleic acid copolymer. These and other foam stabilizers are sometimes referred to as film-forming polymers.

Still other foam stabilizers include acrylamide/ammonium acrylate copolymer, acrylamides/DMAPA acrylates/methoxy PEG methacrylate copolymer, acrylamide/sodium acryloyldimethyltaurate/acrylic acid copolymer, acrylamidopropyltrimonium chloride/acrylamide copolymer, acrylamidopropyltrimonium chloride/acrylates copolymer, acrylates/acetoacetoxyethyl methacrylate copolymer, acrylates/acrylamide copolymer, acrylates/ammonium methacrylate copolymer, acrylates/t-butylacrylamide copolymer, acrylates copolymer, acrylates/C 1-2 succinates/hydroxyacrylates copolymer, acrylates/ethylamine oxide methacrylate copolymer, acrylates/lauryl acrylate/stearyl acrylate/ethylamine oxide methacrylate copolymer, acrylates/octylacrylamide copolymer, acrylates/octylacrylamide/diphenyl amodimethicone copolymer, acrylates/polytrimethyl siloxymethacrylate copolymer, acrylates/stearyl acrylate/ethylamine oxide methacrylate copolymer, acrylates/trifluoropropylmethacrylate/polytrimethyl siloxymethacrylate copolymer, acrylates/VA copolymer, acrylates/VP copolymer, adipic acid/diethylenetriamine copolymer, adipic acid/dimethylaminohydroxypropyl diethylenetriamine copolymer, adipic acid/epoxypropyl diethylenetriamine copolymer, adipic acid/isophthalic acid/neopentyl glycol/trimethylolpropane copolymer, allyl stearate/VA copolymer, aminoethylacrylate phosphate/acrylates copolymer, aminoethylpropanediol-acrylates/acrylamide copolymer, aminoethylpropanediol-AMPD-acrylates/diacetoneacrylamide copolymer, ammonium VA/acrylates copolymer, amodimethicone/silsesquioxane copolymer, AMPD-acrylates/diacetoneacrylamide copolymer, AMP-acrylates/allyl methacrylate copolymer, AMP-acrylates/C1-18 alkyl acrylates/C1-8 alkyl acrylamide copolymer, AMP-acrylates/diacetoneacrylamide copolymer, AMP-acrylates/dimethylaminoethylmethacrylate copolymer, bacillus/rice bran extract/soybean extract ferment filtrate, behenyl methacrylate/ethylamine oxide methacrylate copolymer, bis-butyloxyamodimethicone/PEG-60 copolymer, bis-isobutyl PEG-14/amodimethicone copolymer, bis-isobutyl PEG-15/amodimethicone copolymer, butyl acrylate/ethylhexyl methacrylate copolymer, butyl acrylate/hydroxypropyl dimethicone acrylate copolymer, butyl ester of ethylene/MA copolymer, butyl ester of PVM/MA copolymer, calcium/sodium PVM/MA copolymer, chitosan, chitosan lactate, corn starch/acrylamide/sodium acrylate copolymer, dehydroxanthan gum, diethylene glycolamine/epichlorohydrin/piperazine copolymer, dimethicone crosspolymer, dimethicone/silsesquioxane copolymer, diphenyl amodimethicone, ethyl ester of PVM/MA copolymer, ethyltrimonium chloride methacrylate/hydroxyethylacrylamide copolymer, hydrolyzed wheat protein/PVP crosspolymer, hydroxypropyl dimethiconylpropyl acrylates copolymer, hydroxypropyltrimonium hydrolyzed corn starch, isobutylene/ethylmaleimide/hydroxyethylmaleimide copolymer, isobutylene/MA copolymer, isobutylmethacrylate/trifluoroethylmethacrylate/bis-hydroxypropyl dimethicone acrylate copolymer, isopropyl ester of PVM/MA copolymer, lauryl acrylate crosspolymer, lauryl methacrylate/glycol dimethacrylate crosspolymer, lauryl PEG-9 polydimethylsiloxyethyl dimethicone, methacrylic acid/sodium acrylamidomethyl propane sulfonate copolymer, methacryloyl ethyl betaine/acrylates copolymer, methoxy amodimethicone/silsesquioxane copolymer, methoxy PEG-114/polyepsilon caprolactone, myristic/palmitic/stearic/ricinoleic/eicosanedioic glycerides, octylacrylamide/acrylates/butylaminoethyl methacrylate copolymer, PEG-800/polyvinyl alcohol copolymer, PEG/PPG-25/25 dimethicone/acrylates copolymer, PEG-8/SMDI copolymer, polyacrylamide, polyacrylate-6, polyacrylate-8, polyacrylate-9, polyacrylate-15, polyacrylate-16, polyacrylate-17, polyacrylate-18, polyacrylate-19, polybeta-alanine/glutaric acid crosspolymer, polybutylene terephthalate, polyester-1, polyethylacrylate, polyethylene terephthalate, polyimide-1, polymethacryloyl ethyl betaine, polypentaerythrityl terephthalate, polyperfluoroperhydrophenanthrene, polyquaternium-4/hydroxypropyl starch copolymer, polyurethane-1, polyurethane-6, polyurethane-10, polyurethane-18, polyurethane-19, polyvinyl acetate, polyvinyl butyral, polyvinylcaprolactam, polyvinylformamide, polyvinyl imidazolinium acetate, polyvinyl methyl ether, potassium butyl ester of PVM/MA copolymer, potassium ethyl ester of PVM/MA copolymer, PPG-70 polyglyceryl-10 ether, PPG-12/SMDI copolymer, PPG-51/SMDI copolymer, PVM/MA copolymer, PVP/VA/itaconic acid copolymer, PVP/VA/vinyl propionate copolymer, rhizobian gum, rosin acrylate, shellac, silicone quaternium-16/glycidoxydimethicone crosspolymer, sodium butyl ester of PVM/MA copolymer, sodium ethyl ester of PVM/MA copolymer, sodium polyacrylate, sodium polygamma-glutamate, soy protein phthalate, sterculia urens gum, terephthalic acid/lsophthalic acid/sodium isophthalic acid sulfonate/glycol copolymer, trimethylolpropane triacrylate, trimethylsiloxysilylcarbamoyl pullulan, VA/crotonates copolymer, VA/crotonates/methacryloxybenzophenone-1 copolymer, VA/crotonates/vinyl neodecanoate copolymer, VA/crotonates/vinyl propionate copolymer, VA/DBM copolymer, VA/vinyl butyl benzoate/crotonates copolymer, vinylamine/vinyl alcohol copolymer, vinyl caprolactam/VP/dimethylaminoethyl methacrylate copolymer, VP/acrylates/lauryl methacrylate copolymer, VP/dimethylaminoethylmethacrylate copolymer, VP/DMAPA acrylates copolymer, VP/hexadecene copolymer, VP/methacrylamide/vinyl imidazole copolymer, VP/VA copolymer, VP/vinyl caprolactam/DMAPA acrylates copolymer. yeast palmitate, a silicon-based polymer or resin such as phenylpropyldimethyl siloxysilicate, trimethylsiloxysilicate, cyclopentasiloxane, trimethylsiloxysilicate, diisostearoyl trimethyllolpropane siloxy silicate, vinyl dimethicone crosspoylmer/blends, and alkyl cetearyl dimethicone crosspolymers.

In one embodiment, the foam stabilizer is present in an amount of from 0 to about 4 weight percent, based upon the total weight of the antimicrobial cleansing composition. In another embodiment, the foam stabilizer is present in an amount of from about 0.01 to about 1 weight percent, based upon the total weight of the composition, and in yet another embodiment, the foam stabilizer is present in an amount of from about 0.02 to about 0.2 weight percent, based upon the total weight of the antimicrobial cleansing composition.

In some exemplary embodiments, the subject antimicrobial cleansing composition may be formulated as a liquid soap composition, rather than a foam. In such embodiments, the non-antimicrobial cleansing composition would include one or more thickening agents and optionally one or more stabilizers. Examples of thickening agents and stabilizers include polyurethane-based thickeners, such as steareth-100/PEG-136/HDI copolymer (Rheoluxe^{®} 811); sodium chloride; propylene glycol; PEG-120 methyl glucose dioleate and methyl gluceth-10 (Ritathix DOE, available from Rita Corp.); hydroxyethyl cellulose; quaternized hydroxyethyl cellulose (Polyquaternium-10); Poly(2-methacryloxyethyltrimethylammonium chloride) (Polyquaternium-37); polyquaternium-39; hydroxypropyl cellulose; methyl cellulose; carboxymethyl cellulose; starch polymers; guar hydroxypropyltrimonium chloride; and ammonium acryloyldimethyltaurate/VP copolymer.

In one or more exemplary embodiments, the liquid antimicrobial cleansing composition may include polyacrylate thickening agents, such as those conventionally available and/or known in the art. Examples of polyacrylate thickening agents include carbomers, acrylates/C 10-30 alkyl acrylate cross-polymers, copolymers of acrylic acid and alkyl (C5 -C 10) acrylate, copolymers of acrylic acid and maleic anhydride, and mixtures thereof. In one or more embodiments, the antimicrobial cleansing composition includes an effective amount of a polymeric thickening agent to adjust the viscosity of the composition to a viscosity range of from about 1000 to about 65,000 centipoise. In some embodiments, the viscosity of the composition is from about 5,000 to about 35,000, and in another embodiment, the viscosity is from about 10,000 to about 25,000. The viscosity is measured by a Brookfield RV Viscometer using RV and/or LV Spindles at 22 °C +/- 3 °C.

As will be appreciated by one of skill in the art, the effective amount of thickening agent will vary depending upon a number of factors, including the amount of other ingredients in the non-antimicrobial composition. In one or more embodiments, an effective amount of thickening agent is at least about 0.01 wt. %, based upon the total weight of the composition. In other embodiments, the effective amount is at least about 0.02 wt. %, or at least about 0.05 wt. %, or at least about 0.1 wt. %. In one or more embodiments, the compositions according to the present invention comprise up to about 10% by weight of the total composition of a thickening agent. The amount of thickening agent may be from about 0.01 to about 10.0 wt. %, or from about 0.5 to about 5.0 wt. %, or from about 0.75 to about 2.0 wt. %, based upon the total weight of the composition.

The antimicrobial compositions of the present invention can further comprise a wide range of optional additives, with the proviso that they do not deleteriously affect the compositions' ability to disinfect surfaces. The CTFA International Cosmetic Ingredient Dictionary and Handbook, Eleventh Edition 2005, and the 2004 CTFA International Buyer's Guide, describe a wide variety of non-limiting cosmetic and pharmaceutical ingredients commonly used in the skin care industry, that are suitable for use in the compositions of the present invention. Nonlimiting examples of functional classes of ingredients are described at page 537 of this reference. Examples of these functional classes include: abrasives, anticaking agents, antioxidants, antipruritics, binders, biological additives, bulking agents, chelating agents, chemical additives, colorants/dyes, denaturants, emulsifiers, film formers, fragrance components, humectants, opacifying agents, plasticizers, preservatives (sometimes referred to as antimicrobials), propellants, reducing agents, skin-conditioning agents (emollient, miscellaneous, and occlusive), solvents, foam boosters, hydrotropes, solubilizing agents, suspending agents (nonsurfactant), ultraviolet light absorbers, rheology modifying agents, including salts and polymers, detackifiers, and viscosity increasing agents (aqueous and nonaqueous). Some exemplary humectants may include C₆₋₁₀ alkane diols, glyceryl caprylate/caprate, and glycerin. Examples of other functional classes of materials that may be useful herein include sequestrants, keratolytics, topical active ingredients, and the like. The compositions may also include corrosion inhibitors such as, for example, inorganic sulfates, inorganic silicates, inorganic borates, or inorganic phosphates.

In general, the physical form of the antimicrobial composition is not particularly limited, and in one or more embodiments, the compositions may be formed as a foam, including both aerosol and non-aerosol foams. Other embodiments of the present disclosure include the antimicrobial compositions formulated as a as a liquid that is poured, pumped, sprayed, or otherwise dispensed, including liquid concentrates and dilutable liquids. Other embodiments of the present disclosure include the antimicrobial compositions formulated as a gel. Other embodiments of the present disclosure include the antimicrobial compositions formulated as an aerosol. The antimicrobial compositions of the present invention may be employed on a wide variety of surfaces or substrates, including hard surfaces, soft surfaces, non-living (inanimate) surfaces, living tissue, skin, soil, porous, and non-porous surfaces. In the present disclosure, it is understood that the term "surface" includes skin. Embodiments of the present disclosure may be employed to disinfect or otherwise disinfect inanimate objects such as instruments, medical equipment, furniture, handrails, textiles, etc.

The compositions of the present invention may be employed in many types of dispensers typically used for soaps, sanitizers, or lotion products, for example pump dispensers. A wide variety of pump dispensers are suitable. Pump dispensers may be affixed to bottles or other free-standing containers. Pump dispensers may be incorporated into wall-mounted dispensers. Pump dispensers may be activated manually by hand or foot pump, or may be automatically activated. Useful dispensers include those available from GOJO Industries under the designations NXT^{®} and TFX^{™} as well as traditional bag-in-box dispensers. Examples of dispensers are described in U.S. Pat. Nos. 5,265,772, 5,944,227, 6,877,642, 7,028,861, 7,611,030, and 7,621426. In one or more embodiments, the dispenser includes an outlet such as a nozzle, through which the composition is dispensed. In certain exemplary embodiments, the non-antimicrobial composition is used in dispensers that employ foaming pumps, which combine ambient air or an inert gas and the composition in a mixing chamber and pass the mixture through a mesh screen.

In one or more embodiments, the antimicrobial composition is integrated into wipe composition. Exemplary wipe substrates are further described in U.S. Pat. Nos. 5,686,088, 6,410,499, 6,436,892, 6,495,508, 6,844,308. In one or more embodiments, the wipe may comprise a laminate formed by spunbonding/meltblowing/spunbonding (SMS). Generally, an SMS material contains a meltblown web sandwiched between two exteriors spunbond webs. SMS materials are further described in U.S. Pat. Nos. 4,041,203, 5,169,706, 5,464,688, and 4,766,029, and are commercially available, for example from Kimberly-Clark Corporation under marks such as Spunguard 7 and Evolution 7. The SMS laminate may be treated or untreated.

Surprisingly, the antimicrobial composition according to the invention comprising CHDG, a C8-C16 glycol, and the synergistic non-ionic surfactant package, without the addition of any quaternary ammonium compounds, exhibits efficacious disinfectant properties. Advantageously, the antimicrobial composition fulfills the requirements of the European standard EN1499 for evaluating whether a hygienic hand wash product reduces the release of transient flora when used for washing the artificially contaminated hands of a volunteer. Further, the synergistic tensio-active system allows for the use of less antimicrobial actives in the composition for the same level of activity, thus providing a lower toxicity level.

Even more surprisingly, the ammonium-free antimicrobial composition according to the present invention demonstrates antibacterial properties that are comparable to antimicrobial formulations containing a higher amount of active ingredients and compositions that include active ammonium compounds.

Unless otherwise specified, the term "log reduction" as used herein refers to log10 reduction. In accordance with the present disclosure, the antimicrobial compositions provide a log reduction against *Escherichia coli* of at least 3 log, according to EN 13727. In some exemplary embodiments, the antimicrobial cleansing compositions provide a log reduction against *Eschericha coli* of at least 5 log, according to EN 13727.

### EXAMPLES

The following example is included for the purposes of illustration.

### Example 1

To demonstrate the synergy of the antimicrobial cleansing composition prepared in accordance with the present inventive concepts, one exemplary antimicrobial cleansing composition (Example 1) and five comparative compositions (Comp. Exs. 1 - 5) were then prepared and tested in accordance with EN 1499 protocol. The particular compositions tested are provided below in Table 1.

**TABLE 1**

| | Example 1 | Comp. Ex. 1 | Comp. Ex. 2 | Comp. Ex. 3 | Comp. Ex. 4 | Comp. Ex. 5 |
|---|---|---|---|---|---|---|
| | % | % | % | % | % | % |
| Water | qsp | qsp | Qsp | qsp | qsp | Qsp |
| humectant | 1.0 | 1.0 | 2.0 | 0.5 | 1.0 | 1.0 |
| CHDG | 1.5 | 1.5 | 1.5 | 1.5 | 1.5 | 1.5 |
| Ethylene oxide-propylene oxide block copolymer | 0.45 | 0.54 | 0.35 | ---- | 0.45 | 0.45 |
| Propylene glycol | 10.0 | 10.0 | ---- | ---- | 10.0 | 10.0 |
| caprylyl glycol | ---- | ---- | 0.5 | 0.2 | ---- | 0.5 |
| pentylene glycol | ---- | ---- | ---- | 0.35 | ---- | ---- |
| C8-C16 Alkyl polyglycoside | 0.5 | 0.8 | 0.5 | 0.9 | 0.5 | 0.5 |
| Cocamidopropyl hydroxysultaine | ---- | 0.5 | ---- | ---- | ---- | ---- |
| Amine oxide | 0.270 | ---- | 0.3 | ---- | 0.27 | 0.27 |
| Glycereth-26 | ---- | ---- | 2 | ---- | 2 | 2 |
| Glycereth-2 Cocoate | ---- | ---- | ---- | 1.5 | ---- | ---- |
| pH adjuster | qsp | qsp | Qsp | qsp | qsp | qsp |
| EN 1499 result dose (mL) | pass | fail | fail | fail | fail | fail |
| | 1.06 | 2.01 | 1.8 | 1.7 | 1.75 | 1.8 |

As illustrated above in Table 1, Example 1, including CHDG, ethylene oxide-propylene oxide block copolymer, propylene glycol, a C8-C16 alkyl polyglucoside, and amine oxide provides a composition with a low level of antimicrobial active (1.5 wt.%) that passes the requirements under EN-1499. In contrast, compositions that eliminate or substitute one or more of the essential components do not demonstrate this synergy and do not meet the requirements under EN-1499 (*See* Comparative Examples 1-5).

## Claims

1. An antimicrobial cleansing composition comprising:
from 0.25 wt.% to 5.0 wt.% of at least one bisbiguanide antimicrobial active;
up to 15 wt.% of at least one C2 - C8 glycol;
from 0.1 wt.% to 2.0 wt.% of a first surfactant comprising an ethylene oxide-propylene oxide block copolymer;
at least one additional surfactant selected from the group consisting of a C8-C16 alkyl polyglucoside and an amine oxide; and
water,
wherein the composition has a pH between 5 and 7.

2. The antimicrobial cleansing composition of claim 1, wherein the bisbiguanide antimicrobial active comprises chlorhexidine or salts thereof, preferably chlorhexidine digluconate.

3. The antimicrobial cleansing composition of any of claims 1 to 2, wherein the bisbiguanide antimicrobial active is present in an amount from 1.0 wt.% to 2.5 wt.%, based on the total weight of the composition.

4. The antimicrobial cleansing composition of any of claims 1 to 4, wherein the composition is essentially free of quaternary ammonium compounds.

5. The antimicrobial cleansing composition of any of claims 1 to 4, wherein the at least one C2-C8 glycol comprises a C2-C4 glycol, preferably one or more of butylene glycol, propylene glycol and ethylene glycol, preferably the C2-C4 glycol is propylene glycol.

6. The antimicrobial cleansing composition of any of claims 1 to 5, wherein the C2-C8 glycol is present in an amount from 1.0 wt.% to 13.0 wt.%, based on the total weight of the composition.

7. The antimicrobial cleansing composition of any of claims 1 to 6, wherein the C8-C16 alkyl polyglucoside comprises coco-glucoside.

8. The antimicrobial cleansing composition of any of clams 1 to 7, wherein the amine oxide is selected from the group consisting of lauramine oxide, myristyl dimethylamine oxide, lauryl/myristyl amidopropyl amine oxide, decylamine oxide, myristamine oxide, and cocamidopropylamine oxide.

9. The antimicrobial cleansing composition of any of claims 1 to 8, wherein the ethylene oxide-propylene oxide block copolymer is present in the composition in an amount from about 0.05 to about 1.2 wt.%, based on the total weight of the composition.

10. The antimicrobial cleansing composition of any of claims 1 to 9, wherein the ethylene oxide-propylene oxide block copolymer is a polyoxypropylene/polyoxyethylene block copolymer, preferably the polyoxypropylene/polyoxyethylene block copolymer comprises one or more of PEG-7/PPG-2 propylheptyl ether, PEG-10/PPG-2 propylheptyl ether, and PEG-8/PPG-2 propylheptyl ether.

11. The antimicrobial cleansing composition of any of claims 1 to 10, wherein said composition is a foamable composition.

## Patentansprüche

1. Antimikrobielle Reinigungszusammensetzung, umfassend:
0,25 Gew.-% bis 5,0 Gew.-% mindestens eines antimikrobiellen Bisbiguanid-Wirkstoffs; bis zu 15 Gew.-% mindestens eines C2-C8-Glykols;
0,1 Gew.-% bis 2,0 Gew.-% eines ersten Tensids, das ein Ethylenoxid-Propylenoxid-Blockcopolymer umfasst;
mindestens ein zusätzliches Tensid, ausgewählt aus der Gruppe bestehend aus einem C8-C16-Alkylpolyglucosid und einem Aminoxid; und
Wasser,
wobei die Zusammensetzung einen pH-Wert zwischen 5 und 7 aufweist.

2. Antimikrobielle Reinigungszusammensetzung nach Anspruch 1, wobei der antimikrobielle Bisbiguanid Wirkstoff Chlorhexidin oder Salze davon, vorzugsweise Chlorhexidindigluconat, umfasst.

3. Antimikrobielle Reinigungszusammensetzung nach einem der Ansprüche 1 bis 2, wobei der antimikrobielle Bisbiguanid Wirkstoff in einer Menge von 1,0 Gew.-% bis 2,5 Gew.-%, bezogen auf das Gesamtgewicht der Zusammensetzung, vorhanden ist.

4. Antimikrobielle Reinigungszusammensetzung nach einem der Ansprüche 1 bis 3, wobei die Zusammensetzung im Wesentlichen frei von quaternären Ammoniumverbindungen ist.

5. Antimikrobielle Reinigungszusammensetzung nach einem der Ansprüche 1 bis 4, wobei das mindestens eine C2-C8-Glykol ein C2-C4-Glykol umfasst, vorzugsweise eines oder mehrere von Butylenglykol, Propylenglykol und Ethylenglykol, wobei das C2-C4-Glykol vorzugsweise Propylenglykol ist.

6. Antimikrobielle Reinigungszusammensetzung nach einem der Ansprüche 1 bis 5, wobei das C2-C8-Glykol in einer Menge von 1,0 Gew.-% bis 13,0 Gew.-%, bezogen auf das Gesamtgewicht der Zusammensetzung, vorhanden ist.

7. Antimikrobielle Reinigungszusammensetzung nach einem der Ansprüche 1 bis 6, wobei das C8-C16-Alkylpolyglucosid Coco-Glucosid umfasst.

8. Antimikrobielle Reinigungszusammensetzung nach einem der Ansprüche 1 bis 7, wobei das Aminoxid aus der Gruppe ausgewählt ist, die aus Lauraminoxid, Myristyldimethylaminoxid, Lauryl-/Myristylamidopropylaminoxid, Decylaminoxid, Myristaminoxid und Cocamidopropylaminoxid besteht.

9. Antimikrobielle Reinigungszusammensetzung nach einem der Ansprüche 1 bis 8, wobei das Ethylenoxid-Propylenoxid-Blockcopolymer in der Zusammensetzung in einer Menge von etwa 0,05 bis etwa 1,2 Gew.-%, bezogen auf das Gesamtgewicht der Zusammensetzung, vorhanden ist.

10. Antimikrobielle Reinigungszusammensetzung nach einem der Ansprüche 1 bis 9, wobei das Ethylenoxid-Propylenoxid-Blockcopolymer ein Polyoxypropylen/Polyoxyethylen-Blockcopolymer ist, wobei das Polyoxypropylen/Polyoxyethylen-Blockcopolymer vorzugsweise eines oder mehrere der folgenden umfasst: PEG-7/PPG-2-Propylheptyläther, PEG-10/PPG-2-Propylheptyläther und PEG-8/PPG-2-Propylheptyläther umfasst.

11. Antimikrobielle Reinigungszusammensetzung nach einem der Ansprüche 1 bis 10, wobei die Zusammensetzung eine schäumbare Zusammensetzung ist.

## Revendications

1. Composition nettoyante antimicrobienne comprenant :
de 0,25% en masse à 5,0% en masse d'au moins un actif bisbiguanide antimicrobien ;
jusqu'à 15% en masse d'au moins un glycol en C2 - C8 ;
de 0,1% en masse à 2,0% en masse d'un premier tensioactif comprenant un copolymère bloc oxyde d'éthylène - oxyde de propylène ;
au moins un tensioactif supplémentaire choisi dans le groupe constitué d'un alkyle polyglucoside en C8-C16 et d'un amine oxyde : et
de l'eau,
la composition ayant un pH entre 5 et 7.

2. Composition nettoyante antimicrobienne selon la revendication 1, où l'actif bisbiguanide antimicrobien comprend la chlorhexidine ou ses sels, de préférence le digluconate de chlorhexidine.

3. Composition nettoyante antimicrobienne selon l'une des revendications 1 et 2, où l'actif bisbiguanide antimicrobien est présent en une quantité de 1,0% en masse à 2,5% en masse, rapportée à la masse totale de la composition.

4. Composition nettoyante antimicrobienne selon l'une des revendications 1 à 3, où la composition est essentiellement exempte de composés ammonium quaternaires.

5. Composition nettoyante antimicrobienne selon l'une des revendications 1 à 4, où le au moins un glycol en C2 - C8 comprend un glycol en C2-C4 glycol, de préférence un ou plusieurs de butylène glycol, propylène glycol et éthylène glycol, de préférence le glycol en C2-C4 est le propylène glycol.

6. Composition nettoyante antimicrobienne selon l'une des revendications 1 à 5, où le glycol en C2-C8 glycol est présent en une quantité allant de de 1,0% en masse à 13,0% en masse, rapportée à la masse totale de la composition.

7. Composition nettoyante antimicrobienne selon l'une des revendications 1 à 6, où l'alkyl polyglucoside en C8-C16 comprend le coco-glucoside.

8. Composition nettoyante antimicrobienne selon l'une des revendications 1 à 7, où l'amine oxyde est choisi dans le groupe constitué de lauramine oxyde, myristyl diméthylamine oxyde, lauryl/myristyl amidopropyl amine oxyde, décylamine oxyde, myristamine oxyde, et cocamidopropylamine oxyde.

9. Composition nettoyante antimicrobienne selon l'une des revendications 1 à 8, où le copolymère bloc oxyde d'éthylène - oxyde de propylène est présent en une quantité allant d'environ 0,05 à environ 1,2% en masse, rapportée à la masse totale de la composition.

10. Composition nettoyante antimicrobienne selon l'une des revendications 1 à 9, où où le copolymère bloc oxyde d'éthylène - oxyde de propylène est un copolymère bloc polyoxypropylène/polyoxyéthylène, de préférence le copolymère bloc polyoxypropylène/polyoxyéthylène comprend un ou plusieurs de PEG-7/PPG-2 propylheptyl éther, PEG-10/PPG-2 propylheptyl éther, et PEG-8/PPG-2 propylheptyl éther.

11. Composition nettoyante antimicrobienne selon l'une des revendications 1 à 10, où ladite composition est une composition moussante.
